Europäisches Patentamt

European Patent Office

Office européen des brevets

(11) Numéro de publication: **0 424 236 A1**

# DEMANDE DE BREVET EUROPEEN

(21) Numéro de dépôt: 90402883.4

(51) Int. Cl.⁵: **C01B 21/098**

(22) Date de dépôt: **16.10.90**

(30) Priorité: **20.10.89 FR 8913753**

(43) Date de publication de la demande:
**24.04.91 Bulletin 91/17**

(84) Etats contractants désignés:
**AT BE CH DE DK ES FR GB GR IT LI LU NL SE**

(71) Demandeur: **ATOCHEM**
**4 & 8, Cours Michelet La Défense 10**
**F-92800 Puteaux(FR)**

(72) Inventeur: **De Jaeger, Roger**
**8 Rue des Buissons, Grusons**
**F-59151 Chereng(FR)**
Inventeur: **Pagniez, Guy**
**2 Bois de l'Eglise**
**F-64230 Poey de l'Escar(FR)**
Inventeur: **Potin, Philippe**
**9 Rue des Paquerettes**
**F-64140 Billere(FR)**
Inventeur: **D'Halluin, Ghislaine**
**23B, rue Emile Basly**
**F-62410 Hulluch(FR)**

(74) Mandataire: **Rochet, Michel et al**
**ATOCHEM Département Propriété**
**Industrielle La Défense 10 Cédex 42**
**F-92091 Paris La Défense(FR)**

(54) **Procédé de neutralisation des effets néfastes des impuretés du N-dichlorophosphoryl trichlorophosphazène et de son polycondensat.**

(57) L'invention concerne la neutralisation des effets néfastes des impuretés du N-dichlorophosphoryl trichlorophosphazène ($P_2NOCl_5$).

Ce procédé consiste à traiter ce produit au moyen de $PCl_5$.

Il permet d'accroître la réactivité de $P_2NOCl_5$ et d'obtenir des polycondensats de masse moléculaire élevée.

EP 0 424 236 A1

## PROCEDE DE NEUTRALISATION DES EFFETS NEFASTES DES IMPURETES DU N-DICHLOROPHOSPHORYL TRICHLOROPHOSPHAZENE ET DE SON POLYCONDENSAT

L'invention a pour objet un procédé de neutralisation des effets néfastes des impuretés du N-dichlorophosphoryl trichlorophosphazène de formule :

$$Cl_2 \overset{\overset{\textstyle O}{\|}}{P} - N = PCl_3$$

Le N-(dichlorophosphoryl) trichlorophosphazène (en abrégé $P_2NOCl_5$) est utilisé, en tant que monomère, pour la préparation de polydichlorophosphazène, selon un procédé décrit par exemple dans les brevets français 2.466.435 et 2.571.710, selon le schéma général suivant :
n $Cl_2P(O)$ $NPCl_3$ → $Cl_2P(O)$ $(N = PCl_2)n$ $Cl$ + (n-1)-$POCl_3$

Cette préparation de polydichlorophosphazène par polycondensation nécessite un $P_2NOCl_5$ de très haute pureté. En fonction de la pureté, on pourra obtenir un polydichlorophosphazène de masse plus ou moins élevée, et, dans les cas où la pureté est tout à fait insuffisante, on obtiendra un polymère complètement réticulé.

Les impuretés de $P_2NOCl_5$ peuvent avoir deux principaux types d'action :
- arrêter la croissance des chaînes à un certain niveau de masse moléculaire ;
- induire des réactions parasites de la polycondensation, conduisant à des branchements et à des pontages interchaînes, pour finalement aboutir à un polymère réticulé et ainsi complètement inutilisable.

La qualité du $P_2NOCl_5$ peut donc être appréciée par son comportement et l'on observe des différences de réactivité très importantes au niveau de la polycondensation en fonction des paramètres de préparation du $P_2NOCl_5$. Ainsi les paramètres mentionnés par exemple dans les brevets français 2.612.169, 2.612.171 et 2.606.396 influent sur le comportement du $P_2NOCl_5$ lors de la polycondensation. Des pollutions accidentelles peuvent également intervenir et l'on a observé, par exemple, que des traces d'humidité peuvent limiter la masse moléculaire ou provoquer la réticulation du polycondensat.

La présente invention a donc pour objet d'obtenir du $P_2NOCl_5$ dont le comportement lors de la polycondensation est exempt des aléas mentionnés précédemment.

Plus précisément l'invention a pour objet un procédé de neutralisation des effets néfastes des impuretés du $P_2NOCl_5$, ce procédé consistant à associer $PCl_5$ audit $P_2NOCl_5$.

Au sens de l'invention, l'expression "associer $PCl_5$ à $P_2NOCl_5$" désigne la seule présence simultanée des deux produits, sans impliquer nécessairement une quelconque réaction soit desdits produits, soit de $PCl_5$ avec l'une ou l'autre des impuretés de $P_2NOCl_5$.

De ce fait, $PCl_5$ peut être associé à $P_2NOCl_5$ à différents moments depuis la préparation de $P_2NOCl_5$ lui-même jusqu'à la polycondensation dudit $P_2NOCl_5$. Cependant, étant donné que lorsque $PCl_5$ est introduit dans la solution de synthèse du $P_2NOCl_5$, l'évaporation du solvant peut en entraîner une partie, il est préférable de l'ajouter après concentration du $P_2NOCl_5$ brut. $P_2NOCl_5$ peut être préparé en suivant la technique décrite par exemple dans le brevet américain 3,231,327, ou les brevets français 2.612.169 ou 2.606.396. Lorsque l'on introduit le $PCl_5$ dans le $P_2NOCl_5$ brut, on observe un effet favorable sur la pureté du $P_2NOCl_5$ distillé et également sur le rendement de distillation. En fin de distillation, le bouilleur renferme fréquemment plusieurs pour cent d'oligomères. Lorsque l'on distille en présence de $PCl_5$, on supprime la formation de ces oligomères ce qui est, bien évidemment, favorable au rendement.

L'ajout de $PCl_5$ peut également être fait en début ou en cours de polycondensation, ladite polycondensation pouvant être conduite en suivant par exemple la technique décrite dans les brevets français 2.612.170 et 2.612.172 dont le contenu est incorporé par référence. L'ajout en cours de polycondensation peut permettre de rattraper une polycondensation évoluant de façon défavorable. La polycondensation du $P_2NOCl_5$ présente deux périodes :
- l'une pendant laquelle on observe un départ de $POCl_3$ et pendant laquelle se forment des chaînes courtes (cette période peut durer de 3 à 10 heures à 280°C) ;
- l'autre pendant laquelle s'effectue la croissance des masses moléculaires depuis le niveau d'oligomères jusqu'aux hautes masses, ceci sans dégagement visible de $POCl_3$ (cette période peut durer de 10 à 40 heures à 280°C).

La mesure de la vitesse de dégagement de $POCl_3$ permet approximativement de prévoir le comportement du polycondensat pendant la suite de la polycondensation. Si la vitesse est très rapide (> 1 % de conversion par minute à 260°C), l'expérience montre que la polycondensation conduira à un polymère réticulé. Dans ces conditions, il est possible de rectifier cette réactivité aberrante par l'ajout de $PCl_5$ au cours de la première période.

Cet ajout entraîne un ralentissement immédiat du dégagement de POCl₃ et la polycondensation peut être menée, dans des conditions habituelles, jusqu'à un haut niveau de masse moléculaire, sans réticulation.

Lors de certaines polycondensations, vraisemblablement sous l'effet d'impuretés jouant le rôle de limitateurs de chaîne, la croissance des masses moléculaires s'arrête à des niveaux insuffisants. Dans ces cas, l'ajout de PCl₅ permet à la polycondensation de repartir et d'atteindre le niveau de masse moléculaire désiré.

Lorsque PCl₅ est ajouté au P₂NOCl₅ brut, il n'est généralement pas nécessaire de dépasser un taux de 20 % (poids de PCl₅ par rapport au poids de P₂NOCl₅ brut). Ce taux est avantageusement compris entre 0,1 et 5 %. Lorsque PCl₅ est associé au P₂NOCl₅ soumis à polycondensation, les quantités très élevées de PCl₅ sont à proscrire pour éviter la formation de $P_3NCl_{12}$ selon le processus suivant :

$$P_2NOCl_5 + 2\ PCl_5 \rightarrow (Cl_3\ PNPCl_3)^+\ PCl_6^- + POCl_3$$

la présence, dans le polycondensat, du $P_3NCl_{12}$ ainsi formé, ne conduisant qu'à un polymère de faible masse. La quantité de PCl₅ introduit doit donc être limitée si l'on veut atteindre des masses élevées. Dans cette hypothèse, il convient de considérer un taux de 2 % en poids comme limite supérieure, les quantités recommandées étant en général comprises entre 0,05 et 1 % en poids.

P₂NOCl₅, tel que traité conformément à l'invention, l'association P₂NOCl₅ et PCl₅ de même que les polycondensats de P₂NOC₁₅ traité par association avec PCl₅ constituent également des objets de l'invention.

Les exemples suivants illustrent l'invention.

## EXEMPLE 1 (comparatif)

2.709 g de P₂NOCl₅ brut, préparé selon le procédé décrit dans le brevet US 3,231,327 sont introduits dans le bouilleur d'un appareil de distillation équipé d'une colonne à garnissage et d'une tête à reflux contrôlé. Le produit est distillé à 102° C sous 0,5 torr en tête et 125° C au niveau du bouilleur avec un taux de reflux de 5 pendant l'étêtage et 1 pendant l'équeutage. On obtient, par rapport à la charge initiale :
- Têtes : 348,23 g soit 12,85 %
- Coeur : 2155,02 g soit 79,55 %
- Reste dans le bouilleur : 57,94 g soit 2,14 %
- Volatils condensés dans un piège à azote liquide : 135,83 g soit 5,01 %.

Les têtes sont fortement colorées en jaune. Le coeur est grisâtre.

## EXEMPLE 2

1.876 g du même lot de P₂NOCl₅ brut que celui utilisé dans l'exemple 1, sont introduits dans le bouilleur avec 72,51 g de PCl₅. Le mélange est maintenu pendant 2 heures à 130° C sous agitation, puis distillé dans les conditions identiques à celles de l'exemple 1. Les têtes sont divisées en 3 fractions. Le bilan de la distillation s'établit comme suit par rapport à la charge initiale totale :
- Têtes 1 : 66,64 g soit 3,42 %
(dont 0,46 g de PCl₅)
- Têtes 2 : 117,35 g soit 6,02 %
(dont 0,038 g de PCl₅)
- Têtes 3 : 138,62 g soit 7,11 %
(absence de PCl₅)
- Coeur ; 1373,46 g soit 70,49
- Reste dans le bouilleur : 12 g soit 0,61 %
- Volatils : 195,03 g soit 10,00 %
(dont 62 g de PCl₅)

La tête 1 est légèrement jaune. Les têtes 2 et 3 ainsi que le coeur sont parfaitement incolores.

## EXEMPLE 3 (comparatif)

On effectue une polycondensation dans un réacteur de 500 ml chauffé par circulation d'huile et équipé d'une agitation à ancre, d'une arrivée d'azote, d'une introduction de réactif, d'une sortie de POCl₃ vaporisé, comprenant un condenseur ascendant chauffé à 140° C, suivi d'un condenseur des vapeurs de POCl₃ en position descendante et d'une recette graduée pour recevoir le POCl₃ liquide. L'ensemble est pressurisé sous azote grâce à une garde hydraulique.

On introduit dans le réacteur 138,47 g (0,514 mole) de P₂NOCl₅ provenant de la distillation décrite dans l'exemple 1, qui sont chauffés à 265° C. On observe un dégagement de POCl₃ dont la vitesse entre 20 et 60 % de conversion est de 1,25 %.mn⁻¹. Après 2,07 heures de polycondensation, la conversion plafonne à 87,28 %. On effectue, pendant 20 mn, un balayage du réacteur à l'azote qui permet de récupérer 95,3 % de POCl₃ théorique. On introduit ensuite 97,32 g de trichlorodiphényle. La température du polycondensat est réglée à 280° C. Après 8,37 heures dans ces conditions, on effectue une prise d'échantillon sur laquelle on mesure la viscosité intrinsèque qui est de :

$$\begin{array}{l} \text{THF } * \\ [\eta] \qquad\qquad = 23{,}54 \text{ ml/g} \\ 30°\text{C} \end{array}$$

* Dans tous les essais le THF est additionné de 0,1 % en poids de LiBr et 0,2 % en volume de triméthylchlorosilane.

La polycondensation est poursuivie, mais à 8,83 heures, le polycondensat prend en masse, ne peut plus être agité et devient complètement insoluble dans le benzène.

## EXEMPLE 4

Dans le même appareillage que précédemment, on introduit 278 g (1,032 mole) de $P_2NOCl_5$ provenant de la distillation décrite dans l'exemple 2. Le milieu réactionnel est chauffé à 274° C. Dans ces conditions, la vitesse de dégagement du $POCl_3$ mesurée entre 20 et 60 % de conversion est de 0,39 %.$mn^{-1}$.

Après 12 heures de polycondensation, la conversion plafonne à 93,1 %. On effectue, pendant 45 mn, un balayage du réacteur à l'azote qui permet de récupérer 95,3 % du $POCl_3$ théorique. On introduit ensuite 259,13 g de trichlorodiphényle. La température du polycondensat est réglée à 280° C. Une série d'échantillons est prélevée à différents temps et sur chacun d'eux, on effectue une mesure de viscosité intrinsèque. Après 50 heures de durée totale de polycondensation, cette viscosité plafonne à :

$$[\eta]_{30°C}^{THF} = 54 \ ml/g$$

## EXEMPLE 5

Dans le même appareillage que celui décrit dans l'exemple 3, on introduit 173,91 g (0,645 mole) de $P_2NOCl_5$ provenant de la distillation décrite dans l'exemple 1 et 0,763 g de PCl (0,56 % molaire). L'ensemble est chauffé à 160° C pendant 3,30 heures. La température du milieu est ensuite réglée à 274° C. Dans ces conditions, la vitesse de dégagement du $POCl_3$ mesurée entre 20 et 60 % de conversion, est de 0,67 %.mn-1.

Après 5,15 heures de polycondensation, la conversion plafonne à 96,2 %. On effectue, pendant 15 mn, un balayage du réacteur à l'azote qui permet de récupérer 98,8 % du $POCl_3$ théorique. On introduit ensuite 162,77 g de trichlorodiphényle. La température du polycondensat est réglée à 280° C. Une série d'échantillons est prélevée à différents temps et sur chacun d'eux, on effectue une mesure de viscosité intrinsèque.

Après 52,4 heures de durée totale de polycondensation, cette viscosité plafonne à

$$[\eta]_{30°C}^{THF} = 50,4 \ ml/g$$

## EXEMPLE 6

Dans le même appareillage que celui décrit dans l'exemple 3, on introduit 172 g (0,638 mole) de $P_2NOCl_5$ provenant de la distillation décrite dans l'exemple 1. La température du milieu est réglée à 270° C. Dans ces conditions, la vitesse de dégagement du $POCl_3$ mesurée entre 10 et 35 % de conversion, est de 2,46 %.$mn^{-1}$. Après 0,30 heure de polycondensation, à 35 % de conversion, on introduit dans le polycondensat 1,03 g de $PCl_5$ - (0,77 % molaire). La vitesse de dégagement du $POCl_3$ ralentit immédiatement. Cette vitesse mesurée entre 35 et 60 % est de 0,52 %.$mn^{-1}$. Après 4 heures de polycondensation, la conversion plafonne à 87,8 %. On effectue, pendant 15 mn, un balayage à l'azote qui permet de récupérer 91,9 % du $POCl_3$ théorique. On introduit ensuite 158,3 g de trichlorodiphényle. La température du polycondensat est réglée à 280° C. Une série d'échantillons est prélevée à différents temps et sur chacun d'eux, on effectue une mesure de viscosité intrinsèque. Après 50 heures de durée totale de polycondensation, cette viscosité plafonne à

$$[\eta]_{30°C}^{THF} = 48,7 \ ml/g$$

## Revendications

1. Procédé de neutralisation des effets néfastes des impuretés du N-(dichlorophosphoryl) trichlorophosphazène ($P_2NOCl_5$), caractérisé en ce qu'il consiste à associer du $PCl_5$ audit $P_2NOCl_5$.

2. Procédé selon la revendication 1, caractérisé en ce que $PCl_5$ est associé à $P_2NOCl_5$ lors de la synthèse dudit $P_2NOCl_5$.

3. Procédé selon la revendication 2, caractérisé en ce que $PCl_5$ est associé au $P_2NOCl_5$ brut, non distillé résultant de ladite synthèse.

4. Procédé selon l'une quelconque des revendications 2 à 3, caractérisé en ce que $PCl_5$ est utilisé à un taux pondéral n'excédant pas 20 % par rapport à $P_2NOCl_5$.

5. Procédé selon la revendication 4, caractérisé en ce que $PCl_5$ est utilisé à un taux pondéral compris entre 0,1 et 5 % par rapport à $P_2NOCl_5$.

6. Procédé selon la revendication 1, caractérisé en ce que $PCl_5$ est associé au $P_2NOCl_5$ soumis à une réaction de polycondensation.

7. Procédé selon la revendication 6, caractérisé en ce que $PCl_5$ est associé à $P_2NOCl_5$ en début ou en cours de polycondensation.

8. Procédé selon l'une quelconque des revendications 6 et 7, caractérisé en ce que $PCl_5$ est utilisé à un taux pondéral n'excédant pas 2 % par rapport à $P_2NOCl_5$.

9. Composition de $P_2NOCl_5$, caractérisée en ce qu'elle comprend également $PCl_5$.

10. Polycondensats résultant de la polycondensation d'une composition selon la revendication 9.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 917 802 (ALLCOCK et al.) <br> * revendication 1 * <br> --- | 1,6,7 | C 01 B 21/098 |
| A | US-A-4 116 891 (DIECK et al.) <br> * revendication 1 * <br> --- | 1 | |
| A | US-A-4 522 797 (PETTIGREW et al.) <br> * revendications 1,2 * <br> --- | 1 | |
| A | US-A-4 522 798 (LUM et al.) <br> * revendications 10-13 * <br> --- | 1 | |
| A | EP-A-0 046 584 (THE FIRESTONE TIRE & RUBBER COMPANY) <br> * revendication 1 * <br> --- | 1 | |
| A,D | US-A-3 231 327 (SEGLIN et al.) <br> * revendication 1 * <br> ----- | 1 | |

**DOMAINES TECHNIQUES RECHERCHES (Int. Cl.5)**

C 01 B 21/098

Le présent rapport a été établi pour toutes les revendications

| Lieu de la recherche | Date d'achèvement de la recherche | Examinateur |
|---|---|---|
| BERLIN | 12-12-1990 | CLEMENT J.P. |

EPO FORM 1503 03.82 (P0402)